(19) Europäisches Patentamt
European Patent Office
Office européen des brevets

(11) **EP 2 591 967 B1**

(12) **EUROPÄISCHE PATENTSCHRIFT**

(45) Veröffentlichungstag und Bekanntmachung des Hinweises auf die Patenterteilung:
**07.10.2015 Patentblatt 2015/41**

(21) Anmeldenummer: **12007147.7**

(22) Anmeldetag: **16.10.2012**

(51) Int Cl.:
**B60W 30/18** (2012.01)   **B60W 40/12** (2012.01)
**B60W 40/076** (2012.01)   **B60W 40/10** (2012.01)
**B60W 40/105** (2012.01)   **B60W 50/00** (2006.01)

(54) **Verfahren zum Betreiben eines Fahrzeugs, Steuereinrichtung und Fahrzeug**

Method for operating a vehicle, control device and vehicle

Procédé de fonctionnement d'un véhicule, dispositif de commande et véhicule

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.11.2011 DE 102011119008**

(43) Veröffentlichungstag der Anmeldung:
**15.05.2013 Patentblatt 2013/20**

(73) Patentinhaber: **Volkswagen Aktiengesellschaft 38440 Wolfsburg (DE)**

(72) Erfinder:
• Gadanecz, Aniko
  **38440 Wolfsburg (DE)**
• Dobmann, Michael
  **38444 Wolfsburg (DE)**

(56) Entgegenhaltungen:
DE-A1-102007 018 733   DE-A1-102009 006 524
DE-A1-102010 014 565

EP 2 591 967 B1

**Beschreibung**

Die Erfindung betrifft Verfahren und Einrichtungen, mit denen ein Ausrollweg eines Fahrzeugs bestimmt werden kann. Die Erfindung betrifft insbesondere derartige Verfahren und Einrichtungen, die eine Bestimmung eines Ausrollwegs in einem Betriebszustand, in dem ein Kraftschluss zwischen Motor und Getriebe gelöst ist oder keine Kraftstoffeinspritzung in den Motor erfolgt, erlauben.

Kraftstoff- und Energieeinsparung gewinnen weiter an Bedeutung für den Betrief von Kraftfahrzeugen, um Betriebskosten und Emissionen zu verringern. Verzögerungsmanöver bieten Sparpotenzial bezüglich des Kraftstoffverbrauchs. Eine Kraftstoffeinsparung bei einem Verzögerungsmanöver ist durch eine vorausschauende Verzögerungsstrategie möglich. Hierzu kann insbesondere ein Betriebszustand gewählt werden, der einem Freilauf oder einer Schubabschaltung entspricht. In einem Freilauf-Betriebszustand wird das Fahrzeug in einer Neutralgangstellung verzögert, wobei ein Kraftschluss in einem Antriebsstrang unterbrochen bzw. Motor und Getriebe getrennt werden. Dadurch rollt das Fahrzeug frei. Die Geschwindigkeit wird durch äußere Fahrwiderstände verringert. Die äußeren Fahrwiderstände beinhalten beispielsweise einen Luftwiderstand, einen Steigungswiderstand, eine Rollreibung und einen Beschleunigungswiderstand. In einem Schubabschaltungs-Betriebszustand kann der Fahrer aufhören ein Gaspedal zu betätigen, während der Gang eingelegt bleibt. Es wird eine Motorbremse genutzt. Ein derartiger Zustand wird auch als Schubabschaltung bezeichnet. In dem Schubabschaltungs-Betriebszustand wird das Fahrzeug nicht nur durch äußere Fahrwiderstände, sondern auch durch fahrzeuginterne Kräfte bzw. Momente, die beispielsweise von Reibungskräften im Motor oder Getriebe herrühren, gebremst.

Durch derartige vorausschauende Manöver kann der Kraftstoffverbrauch verringert werden. Falls beispielsweise eine Geschwindigkeit des Fahrzeugs vor einer Geschwindigkeitsbeschränkung ausgehend von einer Anfangsgeschwindigkeit bis zu einer Zielgeschwindigkeit reduziert werden soll, liegt bei einer Fahrweise, bei der die Fahrt mit der Anfangsgeschwindigkeit bis kurz vor der Geschwindigkeitsbeschränkung fortgesetzt und dann ein Bremsmanöver eingeleitet wird, noch über einen längeren Zeitraum ein Konstantfahrtverbrauch vor. Bei einem Freilaufmanöver läuft der Motor im Leerlauf, so dass nur der Leerlaufverbrauch eingespritzt werden muss. Bei einem Schubabschaltungsmanöver muss kein Kraftstoff in den Motor eingespritzt werden.

Um das Einsparpotenzial durch Freilauf- oder Schubabschaltungs-Betriebszustände wirksam nutzen zu können, muss die Position, bei der ein Übergang in den Freilauf- oder Schubabschaltungs-Betriebszustand erfolgen soll, möglichst wirksam und genau berechnet werden. Dies erfordert die Berechnung der Länge eines Ausrollwegs, in dem ein Fahrzeug durch die Fahrwiderstände von einer Anfangsgeschwindigkeit auf eine Zielgeschwindigkeit verlangsamt wird. Abhängig von dem Abstand des Fahrzeugs von der Position, bei der die Zielgeschwindigkeit erreicht sein soll, und der Länge des Ausrollwegs kann ein Steuersignal erzeugt werden. Dieses kann an den Fahrer ausgegeben werden, um diesen zu einer vorausschauenden Fahrweise zu veranlassen. Alternativ oder zusätzlich kann das Steuersignal in einer automatischen Geschwindigkeitsregelfunktion des Fahrzeugs genutzt werden.

Die DE 103 02 504 A1 beschreibt ein Verfahren zum Ermitteln der Reichweite eines Elektrofahrzeugs. Dabei werden Informationen über das Fahrzeug und eine geplante oder aktuell zu befahrende Fahrstrecke erfasst und verarbeitet. Während des Betriebs erfolgt eine Bewertung der Informationen. Eine verbleibende Reichweite des Elektrofahrzeugs wird errechnet und angezeigt.

Die DE 10 2009 002 521 A1 beschreibt ein Verfahren zum Betreiben eines Fahrzeugs in einem Segel- oder Rollmodus, der zur verbrauchs- und emissionsarmen Fahrweise aktiviert wird. Dabei wird in dem Fall, dass eine Fahrgeschwindigkeitsregelungsfunktion oder Fahrgeschwindigkeits- und Abstandsregelungsfunktion aktiv ist und der Segel- bzw. Rollmodus aktiviert oder beibehalten werden soll, eine Geschwindigkeitsrandbedingung getriebesteuerungsseitig adaptiert bzw. angepasst, wenn eine Topografieerkennungseinrichtung eine Senke in der vorausliegenden Fahrstrecke erkennt oder prognostiziert. Es erfolgt eine Anpassung von Geschwindigkeitsrandbedingungen für die Fahrgeschwindigkeitsregelung, wobei die Anpassung während eines Ausrollvorgangs und abhängig von der Topografie vorgenommen wird.

Die DE 10 2009 006 524 A1, auf der der Oberbegriff der unabhängigen Ansprüche beruht, beschreibt Vorrichtungen und Verfahren zur Ermittlung des Ausrollverhaltens eines Fahrzeugs. Ein physikalisch-mathematisches Modell kann für jeden Fahrzeugtyp entwickelt werden oder es kann eine Vorrichtung zur Erfassung des Ausrollverhaltens vorgesehen sein. Die Daten des Ausrollverhaltens können über ein rein mathematisches Modell ohne Kenntnis von Fahrzeugdaten durch ein Kalibrierverfahren ermittelt werden.

Die DE 10 2010 014 565 A1 beschreibt ein Verfahren zur Anpassung von Parametern eines Fahrzeugmodells.

Die DE 10 2007 018 733 A1 offenbart Vorrichtungen und Verfahren zum Bestimmen einer Geschwindigkeitsfunktion zum Verzögern eines Fahrzeugs. Eine Anzeige kann gesteuert werden, um dem Fahrer anzuzeigen, welcher Gang eingelegt werden soll.

Die zuverlässige Bestimmung von Ausrollwegen stellt weiterhin eine Herausforderung dar. Fahrwiderstände werden von physikalischen Größen beeinflusst, beispielsweise von einer Windgeschwindigkeit und einer Windrichtung in einem Weltkoordinatensystem. Diese Größen können den Luftwiderstand wesentlich beeinflussen. Derartige physikalische Größen oder Fahrwiderstandsparameter können sich verändern. Beispielsweise können die Windbedingungen an einem Tag sich deutlich von den Windbedingungen an einem anderen Tag unterscheiden. Derartige Änderungen lassen sich mit herkömmlichen Fahrzeugmodellen nicht zuverlässig abbilden. Ähnlich können Rollwiderstandsbeiwerte und/oder Luftwiderstandsbeiwerte Änderungen unterworfen sein.

Warnfunktionen können vorgesehen werden, falls während des Ausrollvorgangs erkannt wird, dass der tatsächliche Geschwindigkeitsverlauf starke Abweichungen von der Zielgeschwindigkeit am geplanten Ende des Ausrollwegs erwarten lässt. Derartige Warnfunktionen erhöhen zwar die Sicherheit, nicht jedoch die Robustheit und Zuverlässigkeit bei einer erneuten Bestimmung des Ausrollwegs.

Der Erfindung liegt die Aufgabe zugrunde, ein verbessertes Verfahren, eine verbesserte Steuereinrichtung und ein verbessertes Fahrzeug anzugeben. Der Erfindung liegt die Aufgabe zugrunde, derartige Verfahren und Einrichtungen anzugeben, die eine hohe Robustheit und Zuverlässigkeit auch dann aufweisen, wenn sich Werte von physikalischen Fahrwiderstandsparametern ändern.

Die Aufgabe wird erfindungsgemäß durch ein Verfahren, eine Steuereinrichtung und ein Fahrzeug mit den in den unabhängigen Ansprüchen angegebenen Merkmalen gelöst. Die abhängigen Ansprüche definieren bevorzugte und vorteilhafte Ausführungsformen der Erfindung.

Bei einem Verfahren zum Betreiben eines Fahrzeugs wird ein Ausrollweg des Fahrzeugs in Abhängigkeit von Werten für eine Mehrzahl von Fahrwiderstandsparametern ermittelt. Während eines Ausrollvorgangs, bei dem ein Freilauf-Betriebszustand oder ein Schubabschaltungs-Betriebszustand des Fahrzeugs vorliegt und sich das Fahrzeug ausgehend von einer Anfangsgeschwindigkeit bis zu einer Zielgeschwindigkeit verlangsamt, wird eine Bewegung des Fahrzeugs zu mehreren Zeiten erfasst. Ein adaptierter Wert wird für wenigstens einen Fahrwiderstandsparameter der Mehrzahl von Fahrwiderstandsparametern in Abhängigkeit von der erfassten Bewegung des Fahrzeugs festgelegt. Der adaptierte Wert für den wenigstens einen Fahrwiderstandsparameter wird zum nachfolgenden Ermitteln eines weiteren Ausrollwegs ausgehend von einer weiteren Anfangsgeschwindigkeit bis zu einer weiteren Zielgeschwindigkeit verwendet.

Bei dem Verfahren wird der Wert wenigstens eines Fahrwiderstandsparameters, der in die Berechnung des Ausrollwegs von einer Anfangsgeschwindigkeit bis zu einer Endgeschwindigkeit eingeht, adaptiert. Der adaptierte Wert wird für eine nachfolgende Ermittlung eines weiteren Ausrollwegs verwendet. Auf diese Weise kann eine Übereinstimmung zwischen einem Modell bzw. einer Gleichung, die zur Berechnung des Ausrollwegs herangezogen wird, und dem tatsächlichen Verhalten des Fahrzeugs verbessert werden. Dadurch können Änderungen in physikalischen Parametern, beispielsweise eine Änderung im Luftwiderstandsbeiwert, berücksichtigt werden. Die Adaption implementiert ein lernendes Fahrzeugmodell. Durch die Adaption wird eine Abweichung zwischen gemessenen und rechnerisch vorhergesagten Geschwindigkeitsverläufen verringert.

Die Fahrwiderstandsparameter sind Parameter derjenigen Funktion, die zum Bestimmen des Ausrollwegs im Fahrzeug rechnerisch ausgewertet wird. Als "Ausrollweg" wird hier die Länge einer Strecke bezeichnet, in der sich das Fahrzeug von einer Anfangsgeschwindigkeit bis zu einer Zielgeschwindigkeit verlangsamt, wenn ein Freilauf-Betriebszustand oder ein Schubabschaltungs-Betriebszustand des Fahrzeugs vorliegt. Die Fahrwiderstandsparameter können beispielsweise eine Windgeschwindigkeit in einem Weltkoordinatensystem, eine Windrichtung in einem Weltkoordinatensystem, eine Luftwiderstandsbeiwert des Fahrzeugs, eine Straßensteigung und einen Rollreibungskoeffizienten umfassen.

Eine Adaption erfolgt wenigstens für eine Windgeschwindigkeitskomponente entlang einer Fahrtrichtung, die das Fahrzeug während des Ausrollvorgangs hat. Diese Windgeschwindigkeitskomponente beeinflusst den Luftwiderstand. Diese Windgeschwindigkeitskomponente kann bei einer weiteren Berechnung eines Ausrollwegs berücksichtigt werden, bei dem sich das Fahrzeug parallel oder antiparallel zu dem Ausrollvorgang bewegt, bei dem die Windgeschwindigkeitskomponente entlang der Fahrtrichtung bestimmt wurde. Die Bestimmung kann aus einer Analyse der Bewegung des Fahrzeugs während des Ausrollvorgangs erfolgen. Die Verwendung eines separaten Sensors zur Messung der Windgeschwindigkeitskomponente ist nicht erforderlich.

Bei dem Verfahren kann eine Bewegung des Fahrzeugs zu mehreren Zeiten während eines weiteren Ausrollvorgangs erfasst werden. Eine Fahrtrichtung des Fahrzeugs während des Ausrollvorgangs und eine Fahrtrichtung des Fahrzeugs während des weiteren Ausrollvorgangs sind voneinander verschieden und weder parallel noch antiparallel zueinander. Die Adaption kann die Bestimmung eines adaptierten Werts für einen Betrag einer Windgeschwindigkeit und für eine Windrichtung beinhalten. Aus dem Betrag der Windgeschwindigkeit und der Windrichtung im Weltkoordinatensystem kann für beliebige Fahrtrichtungen bei nachfolgenden Ausrollvorgängen die Komponente der Windgeschwindigkeit berechnet werden, die entlang des Ausrollwegs gerichtet ist. Dies erlaubt die Berücksichtigung des Windgeschwindigkeitsvektors, der nun im Weltkoordinatensystem bekannt ist, bei einer weiteren Berechnung eines Ausrollwegs. Die Verwendung eines separaten Sensors zur Messung des Windgeschwindigkeitsvektors ist nicht erforderlich.

Eine Adaption kann wenigstens für einen Luftwiderstandsbeiwert des Fahrzeugs, eine effektive Luft-Widerstandsfläche und/oder eine Straßensteigung erfolgen. Auf diese Weise kann beispielsweise berücksichtigt werden, dass sich der Luftwiderstand signifikant ändern kann, wenn zusätzliche Aufbauten an dem Fahrzeug angebracht werden.

Beispiele hierfür beinhalten das Anbringen einer Fahrradhalterung, eines Dachträgers oder eines Skiträgers.

Das Bestimmen des adaptierten Werts für den wenigstens einen Fahrwiderstandsparameter kann selektiv erst nach dem Ausrollvorgang durchgeführt werden. Dazu kann überprüft werden, ob ein Ausrollvorgang beendet ist. Dies kann durch eine Überwachung einer Gangschaltung, einer Bremsbetätigung oder einer Gaspedalbetätigung erfolgen. Beispielsweise kann das Ende des Ausrollvorgangs erkannt werden, wenn eine der folgenden Fahreraktionen durchgeführt wird: Betätigung des Gaspedals bei eingelegtem Gang oder Betätigung der Bremse. Dadurch kann das Sammeln von Daten über die Bewegung des Fahrzeugs während des gesamten Ausrollvorgangs durchgeführt werden, so dass eine große Anzahl von Datenpunkten zur Verfügung steht. Dies erhöht die Robustheit der Adaption. In diesem Fall werden die adaptierten Werte erst für die nachfolgende Berechnung eines weiteren Ausrollwegs verwendet, während sie für einen Überprüfung oder einen Eingriff in den aktuellen Ausrollvorgang unberücksichtigt bleiben können.

Um die Bewegung des Fahrzeugs während des Ausrollvorgangs zu erfassen, kann die Geschwindigkeit des Fahrzeugs erfasst werden. Geschwindigkeitswerte können mit einer vorherbestimmten zeitlichen Rate, also jeweils nach einem vorgegebenen Zeitintervall, erfasst werden. Zusätzlich können Beschleunigungswerte mit der Rate, d.h. jeweils nach dem Zeitintervall, erfasst werden. Die Beschleunigungswerte können vorteilhaft aus den erfassten Geschwindigkeitswerten berechnet werden. Dadurch kann die Robustheit erhöht werden, wenn ein Beschleunigungssensor nicht ausreichend genau arbeiten kann. Die Geschwindigkeitswerte können vor der weiteren Verarbeitung, insbesondere vor einer rechnerischen Ermittlung der Beschleunigungswerte, einer Tiefpassfilterung unterzogen werden. Dadurch können kurzzeitige Geschwindigkeitsschwankungen und/oder hochfrequentes Messrauschen unterdrückt werden. Basierend auf den zeitdiskreten Geschwindigkeits- und Beschleunigungswerten können die Werte für die Fahrwiderstandsparameter wirksam adaptiert werden.

Das Bestimmen des adaptierten Werts für den wenigstens einen Fahrwiderstandsparameter kann basierend auf einem Gleichungssystem, das linear in einer Windgeschwindigkeitskomponente entlang einer Fahrtrichtung des Fahrzeugs während des Ausrollvorgangs und linear in einem Luftwiderstandsbeiwert des Fahrzeugs ist, erfolgen. Derartige lineare Gleichungssysteme, die linear in Parametern sind, können effizient und robust gelöst werden. Der adaptierte Wert für den wenigstens einen Fahrwiderstandsparameter kann mit der Methode der kleinsten Quadrate bestimmt werden. Wenn Geschwindigkeiten und Beschleunigungen zu mehr, insbesondere zu viel mehr als drei Zeitpunkten während des Ausrollvorgangs bestimmt werden, können aus einem überbestimmten Gleichungssystem robuste Abschätzungen für die adaptierten Werte der Fahrwiderstandsparameter gewonnen werten.

Die Geschwindigkeit des Fahrzeugs kann zu mindestens drei Zeiten während des Ausrollvorgangs erfasst werden. Die Geschwindigkeit des Fahrzeugs kann auch zu mindestens vier Zeiten während des Ausrollvorgangs erfasst werden. Dies erlaubt eine Adaption der relevantesten Fahrwiderstandsparameter, wie Luftwiderstandsbeiwert und Rollwiderstandsbeiwert.

Das Bestimmen des adaptierten Werts für den wenigstens einen Fahrwiderstandsparameter kann abhängig von in einer digitalen Karte hinterlegten Daten durchgeführt werden. Das Bestimmen des adaptierten Werts für den wenigstens einen Fahrwiderstandsparameter kann abhängig von einer in der digitalen Karten hinterlegten Straßensteigung oder aus der digitalen Karte abgeleiteten Straßensteigung durchgeführt werden. Auf diese Weise kann eine auf das Fahrzeug wirkende Schwerkraft berücksichtigt werden. Das Bestimmen des adaptierten Werts für den wenigstens einen Fahrwiderstandsparameter kann abhängig von einer in der digitalen Karte hinterlegten Richtung wenigstens einer Straße erfolgen, auf der das Fahrzeug während des Ausrollvorgangs fährt. Auf diese Weise kann eine relative Richtungsänderung zwischen Ausrollvorgängen und die daraus resultierende Änderung zwischen der Windrichtung und der Fahrtrichtung bei unterschiedlichen Ausrollvorgängen berücksichtigt werden.

Während eines laufenden Ausrollvorgangs kann eine Überprüfung durchgeführt werden, um Abweichungen zwischen dem rechnerisch vorhergesagten Ausrollweg und dem tatsächlichen Ausrollweg und/oder Abweichungen zwischen einer Endgeschwindigkeit am Ende des vorhergesagten Ausrollwegs und der Zielgeschwindigkeit noch während des Ausrollvorgangs zu erkennen. Die Überprüfung kann abhängig von der erfassten Bewegung des Fahrzeugs durchgeführt werden. Die Überprüfung kann eine Kalman-Filterung umfassen. Falls ermittelt wird, dass der vor Beginn des Ausrollvorgangs rechnerisch vorhergesagte Ausrollweg und eine während des Ausrollvorgangs basierend auf der erfassten Bewegung des Fahrzeugs ermittelte verbesserte Schätzung des Ausrollwegs um mehr als einen Schwellenwert voneinander abweichen, kann selektiv ein Warnsignal erzeugt werden. Alternativ oder zusätzlich kann, falls ermittelt wird, dass eine während des Ausrollvorgangs basierend auf der erfassten Bewegung des Fahrzeugs ermittelte Schätzung der Endgeschwindigkeit am Ende des Ausrollwegs und die Zielgeschwindigkeit um mehr als einen Schwellenwert voneinander abweichen, selektiv ein Warnsignal erzeugt werden. Das Warnsignal kann über eine Schnittstelle an einen Fahrer ausgegeben werden. Das Warnsignal kann auch an eine Geschwindigkeitsregelfunktion oder eine andere Steuerfunktion des Fahrzeugs ausgegeben werden, um eine automatische Anpassung während des Ausrollvorgangs zu erreichen.

Bei der Überprüfung während des laufenden Ausrollvorgangs unter Verwendung einer Kalman-Filterung können auch angepasste Werte für Fahrwiderstandsparameter ermittelt werden. Diese können ebenfalls zur Bestimmung adaptierter Werte von Fahrwiderstandsparametern herangezogen werden. Die abhängig von der Kalman-Filterung adaptierten Werte von Fahrwiderstandsparametern können bei der Bestimmung eines weiteren Ausrollwegs, bei dem sich das Fahrzeug ausgehend von einer weiteren Anfangsgeschwindigkeit bis zu einer weiteren Endgeschwindigkeit verlangsamt, herangezogen werden.

Nach einem weiteren Ausführungsbeispiel wird eine Steuereinrichtung für ein Fahrzeug angeben. Die Steuereinrichtung weist eine Schnittstelle zum Empfangen von Daten auf, die eine Bewegung des Fahrzeugs zu mehreren Zeiten während eines Ausrollvorgangs, bei dem ein Freilauf-Betriebszustand oder ein Schubabschaltungs-Betriebszustand des Fahrzeugs vorliegt und sich das Fahrzeug ausgehend von einer Anfangsgeschwindigkeit bis zu einer Zielgeschwindigkeit verlangsamt, beschreiben. Die Steuereinrichtung weist eine elektronische Recheneinrichtung auf, die mit der Schnittstelle gekoppelt ist und die eingerichtet ist, um einen Ausrollweg des Fahrzeugs in Abhängigkeit von Werten für eine Mehrzahl von Fahrwiderstandsparametern zu ermitteln. Die Steuereinrichtung ist eingerichtet, um einen adaptierten Wert für wenigstens einen Fahrwiderstandsparameter der Mehrzahl von Fahrwiderstandsparametern in Abhängigkeit von den empfangenen Daten zu bestimmen. Die Steuereinrichtung ist eingerichtet, um den adaptierten Wert für den wenigstens einen Fahrwiderstandsparameter zum nachfolgenden Ermitteln eines weiteren Ausrollwegs ausgehend von einer weiteren Anfangsgeschwindigkeit bis zu einer weiteren Zielgeschwindigkeit zu verwenden.

Die mit der Steuereinrichtung erreichten Wirkungen entsprechen den mit dem Verfahren erreichten Wirkungen. Ausgestaltungen der Steuereinrichtung nach verschiedenen Ausführungsbeispielen und die damit jeweils erreichte Wirkungen entsprechen den Ausgestaltungen des Verfahrens. Die Steuereinrichtung kann zur Durchführung des Verfahrens nach einem Aspekt oder Ausführungsbeispiel der Erfindung eingerichtet sein.

Nach einem weiteren Ausführungsbeispiel wird ein Fahrzeug angegeben, das die elektronische Steuereinrichtung umfasst. Das Fahrzeug kann einen Speicher umfassen, in dem eine elektronische Karte hinterlegt ist. Die Steuereinrichtung kann die Ermittlung des Ausrollwegs und/oder die Bestimmung adaptierter Werte für Fahrwiderstandsparameter abhängig von in dem Speicher hinterlegten Daten durchführen. Das Fahrzeug kann wenigstens einen Sensor zum Erfassen von Eigenschaften der Umgebungsluft aufweisen. Der wenigstens eine Sensor kann zum Erfassen eines Umgebungsluftdrucks und einer Umgebungslufttemperatur eingerichtet sein. Diese Informationen kann die Steuereinrichtung bei der Ermittlung des Ausrollwegs berücksichtigen, um den Luftwiderstand entsprechend anzupassen.

Die Erfindung wird nachfolgend unter Bezugnahme auf die beigefügten Zeichnungen anhand von Ausführungsbeispielen detaillierter beschrieben werden.

Fig. 1  zeigt ein Fahrzeug mit einer Steuereinrichtung nach einem Ausführungsbeispiel.

Fig. 2  veranschaulicht Ausrollmanöver für einen Freilauf-Betriebszustand oder einen Schubabschaltungs-Betriebszustand.

Fig. 3  zeigt schematisch Vorgänge, die bei Verfahren und Einrichtungen nach Ausführungsbeispielen ausgeführt werden.

Fig. 4  veranschaulicht eine Adaption von Fahrwiderstandsparamtern.

Fig. 5  zeigt einen Ablaufplan eines Verfahrens nach Ausführungsbeispielen.

Fig. 6  zeigt eine Draufsicht eines Straßennetzes zur Veranschaulichung einer Ermittlung eines Luftwiderstands.

Fig. 7  veranschaulicht die Wirkungsweise eines erweiterten Kalman-Filters.

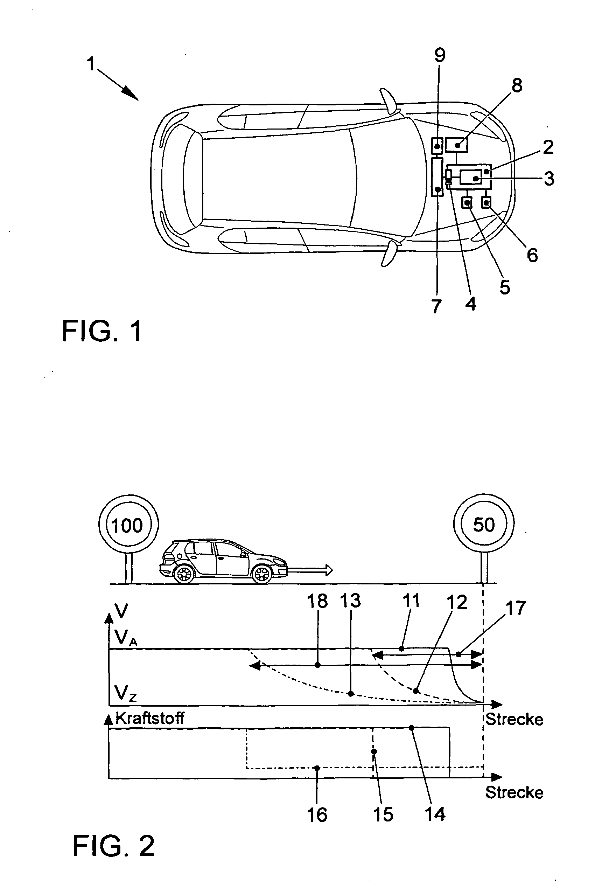

Fig. 1 zeigt ein Fahrzeug mit einer Steuereinrichtung 2 nach einem Ausführungsbeispiel. Die Steuereinrichtung 2 bestimmt rechnerisch einen Ausrollweg, in dem das Fahrzeug 1 ausgehend von einer Anfangsgeschwindigkeit eine Zielgeschwindigkeit erreichen würde. Die Steuereinrichtung 2 kann eingerichtet sein, um für das Fahrzeug in einem Freilauf-Betriebszustand, in dem keine Drehmomentübertragung vom Motor an Räder erfolgt, und/oder in einem Schubabschaltungs-Betriebszustand, in dem der Fahrer die Motorbremse nutzt, einen Ausrollweg rechnerisch zu ermitteln. Abhängig von dem ermittelten Ausrollweg kann beispielsweise ein Signal an den Fahrer ausgegeben werden, um diesen zu veranlassen, keinen Gang einzulegen (Freilauf) oder das Gaspedal nicht mehr zu betätigen (Schubabschaltung), um so ein Ausrollen auf die Zielgeschwindigkeit an einer gewünschten Position zu erreichen. Alternativ oder zusätzlich kann das Signal von der Steuereinrichtung 2 an andere Funktionen des Fahrzeugs 1 ausgegeben werden, beispielsweise an eine Geschwindigkeitsregelung 6 oder eine andere Funktion des Fahrzeugs, die den Betrieb unmittelbar beeinflusst.

Die Steuereinrichtung 2 kann verschiedene Informationen heranziehen, um den Ausrollweg zu berechnen und ein entsprechendes Signal zu generieren. Die Steuereinrichtung 2 ist mit einem Speicher 8 gekoppelt oder der Speicher 8 ist in die Steuereinrichtung 2 integriert. In dem Speicher 8 ist eine elektronische Karte hinterlegt. Die elektronische Karte beinhaltet Informationen über Geschwindigkeitsbegrenzungen, Ampeln und/oder andere Positionen, an denen eine bestimmte Soll-Geschwindigkeit eingehalten werden muss. Die elektronische Karte beinhaltet auch Informationen über die Positionen, an denen die entsprechenden Soll-Geschwindigkeiten eingehalten werden müssen. Die elektronische Karte beinhaltet darüber hinaus vorteilhaft auch noch weitere Informationen, die zur Ausrollwegberechnung genutzt werden. Beispielsweise kann die elektronische Karte Höhen- oder Steigungsinformation umfassen. Diese Information kann von der Steuereinrichtung 2 ausgelesen werden, um den Einfluss der Steigung auf die Kinetik des Fahrzeugs 1 zu berücksichtigen. Beispielsweise kann anhand der Steigung die parallel zur Straßenkomponente wirkende Komponente der Schwerkraft ermittelt werden. Alternativ oder zusätzlich kann berücksichtigt werden, dass die Rollreibungskraft ebenfalls von der Steigung abhängt.

Die Steuereinrichtung 2 bestimmt abhängig von einer aktuellen Geschwindigkeit und/oder einer theoretischen Anfangsgeschwindigkeit einen Ausrollweg, wobei die in der digitalen Karte hinterlegten Daten herangezogen werden können. Eine Ist-Geschwindigkeit kann über eine Schnittstelle 4 von einer Geschwindigkeitsmesseinrichtung, beispielsweise über ein Bordnetz 7 empfangen werden. Eine elektronische Recheneinrichtung 3, die einen oder mehrere Prozessoren umfassen kann, führt die rechnerische Bestimmung des Ausrollwegs für einen Freilauf-Betriebszustand und/oder einen Schubabschaltungs-Betriebszustand durch. Die rechnerische Ermittlung des Ausrollwegs beruht auf einem Fahrzeugmodell, das durch verschiedene Fahrwiderstandsparameter definiert ist. Die Fahrwiderstandsparameter können beispielsweise einen Rollreibungskoeffizienten bzw. Beiwert des Rollwiderstands $f_r$ beinhalten. Die Fahrwiderstandsparameter können auch physikalische Parameter beinhalten, die den Luftwiderstand beeinflussen, beispielsweise einen Beiwert des Luftwiderstands oder einen aerodynamischen Kennwert.

Wird das Fahrzeug 1 gestartet, können Standardwerte für die Fahrwiderstandsparameter, die in einem Speicher hinterlegt sein können, von der Recheneinrichtung 3 ausgelesen und bei der Bestimmung des Ausrollwegs verwendet werden. Nach Ausführungsbeispielen der Erfindung ist vorgesehen, dass Werte für einen oder mehrere Fahrwiderstandsparameter, die die Kinetik des Fahrzeugs 1 während des Ausrollvorgangs beschreiben, adaptiert werden. Auf diese Weise ist eine Anpassung an unterschiedliche Bedingungen möglich. Beispielsweise kann sich der Beiwert des Luftwiderstands verändern, wenn Anbauten an dem Fahrzeug 1 angebracht werde, beispielsweise eine Dachbox, ein Skiträger oder ein Fahrradständer. Der Beiwert des Rollwiderstands kann sich abhängig von Bereifung, Reifendruck oder Fahrbahnbelag ändern.

Zur Durchführung der Adaption empfängt die Recheneinrichtung 3 über die Schnittstelle 4 Daten, die die Bewegung des Fahrzeugs während eines Ausrollvorgangs beschreiben. Beispielsweise können die Daten Geschwindigkeitswerte sein, die während des Ausrollvorgangs mit einer vorgegebenen Rate abgetastet werden, d.h. die jeweils nach einem vorgegebenen Zeitintervall ausgelesen werden. Die Recheneinrichtung 3 kann diese Daten mit dem Fahrzeugmodell vergleichen, mit dem das Verhalten des Fahrzeugs während des Ausrollvorgangs rechnerisch vorhergesagt wird. Der Wert eines oder mehrerer Fahrwiderstandsparameter, die in das Fahrzeugmodell eingehen, werden abhängig von dem Vergleich angepasst. Die Übereinstimmung zwischen dem beobachteten tatsächlichen Verhalten des Fahrzeugs und dem Fahrzeugmodell, das zur Vorhersage von Ausrollwegen verwendet wird, kann so verbessert werden. Die adaptierten Werte für die Fahrwiderstandsparameter werden bei einer nachfolgenden Berechnung des Ausrollwegs als Initialwerte verwendet. Die Adaption kann zeitsequentiell wiederholt werden. Durch die Adaption können beispielsweise geänderte Beiwerte des Luftwiderstands oder des Rollwiderstands ermittelt und berücksichtigt werden.

Das Bestimmen adaptierter Werte für Fahrwiderstandsparameter kann nach dem Ende eines Ausrollvorgangs erfolgen. Ein Vergleich des tatsächlichen und vorhergesagten Fahrzeugverhaltens kann in effizienter und robuster Weise, beispielsweise durch Lösen eines überbestimmten Gleichungssystems, das linear in Fahrwiderstandsparametern ist, von der Recheneinrichtung 3 vorgenommen werden. Fahrwiderstandsparameter können mit der Methode der kleinsten Quadrate, beispielsweise durch Berechnung einer Moore-Penrose-Pseudoinversen ermittelt werden. Wenn die Adaption nach dem Ende des Ausrollvorgangs erfolgt, steht typischerweise eine über längere Zeit gewonnene Datenbasis zur Verfügung, die einen Vergleich des tatsächlichen Verhaltens des Fahrzeugs mit dem nach dem Fahrzeugmodell vorhergesagten Verhalten erlaubt.

Alternativ oder zusätzlich kann auch eine Überprüfung des Verhaltens des Fahrzeugs während des Ausrollvorgangs erfolgen. Bei einer derartigen Überprüfung oder Beobachtung während des Ausrollvorgangs kann das nach dem Fahrzeugmodell vorhergesagte Verhalten mit dem tatsächlichen Verhalten des Fahrzeugs verglichen werden. Abweichungen können während des Ausrollvorgangs erkannt werden. Überschreitet eine Abweichung einen vorgegebenen Schwellenwert, kann ein Warnsignal erzeugt werden. Die Steuereinrichtung 2 kann dazu beispielsweise das Warnsignal über eine Benutzerschnittstelle 9 an den Fahrer ausgeben. Es kann auch ein Warnsignal an andere Komponenten des Fahrzeugs 1 ausgegeben werden, beispielsweise an die Geschwindigkeitsregelung 6.

Zusätzliche Sensoren können von der Steuereinrichtung 2 ausgelesen werden, um sich ändernde Umwelteinflüsse bei der Bestimmung des Ausrollwegs zu berücksichtigen. Beispielsweise kann die Steuereinrichtung 2 von einem Temperatur- und/oder Luftdrucksensor 5 eine aktuelle Temperatur und/oder einen aktuellen Luftdruck der Luft in der Umgebung des Fahrzeugs 1 empfangen. Diese Werte können verwendet werden, um die Luftdichte in der Umgebung des Fahrzeugs 1 zu berechnen. Die Luftdichte geht als Koeffizient in den Luftwiderstand ein.

Fig. 2 veranschaulicht das Einsparpotenzial, das durch Freilauf oder Schubabschaltung realisiert werden kann.

Die Position einer Geschwindigkeitsbegrenzung kann aus der digitalen Karte entnommen werden. Bei einer herkömmlichen Fahrweise würde ein Fahrer bis kurz vor der Geschwindigkeitsbegrenzung mit konstanter Geschwindigkeit weiterfahren und dann bremsen. Dies führt zu einem Geschwindigkeitsverlauf 11 und einer Kraftstoffeinspritzung 14. Bei einem Schubabschaltungsmanöver wird die Motorbremse genutzt. Dies führt zu einem Geschwindigkeitsverlauf 12 und einer Kraftstoffeinspritzung 15. Die gesamte in den Motor eingespritzte Kraftstoffmenge ist für das Schubabschaltungsmanöver kleiner als für die herkömmliche Fahrweise, bei der bis kurz vor Erreichen der Geschwindigkeitsbegrenzung Kraftstoff in den Motor eingespritzt wird, um eine Geschwindigkeit zu halten. Bei einem Freilaufmanöver resultiert ein Geschwindigkeitsverlauf 13 und einer Kraftstoffeinspritzung 16. Die im Freilauf erfolgende Kraftstoffeinspritzung entspricht einem Leerlaufverbrauch und ist geringer als der Konstantfahrverbrauch.

Um eine vorausschauende Fahrweise, die Ausrollvorgänge zur Reduzierung des Kraftstoffverbrauchs nutzt, zu ermöglichen, berechnet die Steuereinrichtung 2 des Fahrzeugs 1 einen Ausrollweg 17 für Freilauf und/oder einen Ausrollweg 18 für Schubabschaltung. Die Berechnung für Schubabschaltung kann für den jeweils eingelegten Gang erfolgen, so dass gangabhängige Schubparameter bzw. das gangabhängige bremsende Moment der Motorbremse berücksichtigt werden können. Zur Erhöhung der Genauigkeit erfolgt eine Adaption von Werten für Fahrwiderstandsparametern. Die Adaption kann wenigstens nach dem Ende eines Ausrollvorgangs durchgeführt werden. Die adaptierten Werte von Fahrwiderstandsparameter können für wenigstens eine später durchgeführte Ausrollwegberechnung verwendet werden.

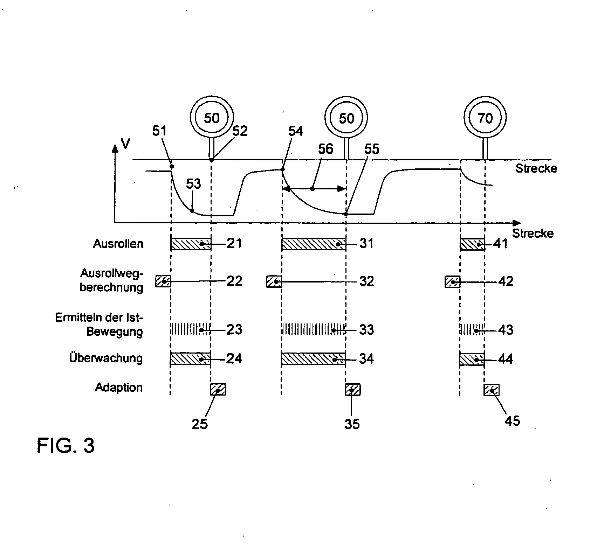

Fig. 3 zeigt eine schematische Darstellung zur Erläuterung der Funktionsweise der Steuereinrichtung 2. Dargestellt sind verschiedene Funktionen der Steuereinrichtung 2 und deren Beziehung zu Ausrollmanövern. Die Funktionen beinhalten die Berechnung eines Ausrollwegs vor einem Ausrollvorgang, die auch als Vorsteuerung bezeichnet wird. Die Funktionen beinhalten die Überprüfung einer Bewegung des Fahrzeugs während des Ausrollvorgangs. Dies kann auch als "online"-Überprüfung oder "online"-Beobachtung bezeichnet werden, da während des laufenden Ausrollvorgangs eine fortgesetzte Überwachung erfolgt. Die Funktionen beinhalten die Adaption eines Werts wenigstens eines Fahrwiderstandsparameters. Die Adaption kann nach dem Ende eines Ausrollvorgangs erfolgen.

Wenn das Fahrzeug in Betrieb genommen wird, kann die Steuereinrichtung vor einem Ausrollvorgang 21 in einer Phase 22 eine Ausrollwegberechnung vornehmen. Diese kann abhängig von Standardwerten für Fahrwiderstandsparameter erfolgen, die permanent in dem Fahrzeug gespeichert sein können. Die Ausrollwegberechnung gibt an, an welcher Position 51 ein Freilauf- oder Schubabschaltungsmanöver eingeleitet werden muss, um ausgehend von einer bekannten Anfangsgeschwindigkeit eine bekannte Zielgeschwindigkeit an einer Position 52 zu erreichen. Die Ausrollwegberechnung erfolgt abhängig von Informationen, die aus einer digitalen Karte abgerufen werden, beispielsweise abhängig von einer Steigung der Straße, auf der sich das Fahrzeug vor Erreichen einer Geschwindigkeitsbegrenzung befindet. Während des Ausrollvorgangs wird in einer Phase 23 die Bewegung des Fahrzeugs ermittelt. Dazu können mit einem vorgegebenen zeitlichen Intervall jeweils Geschwindigkeiten 53 des Fahrzeugs erfasst werden. Die Geschwindigkeiten 53 können tiefpassgefiltert werden. Parallel zu der Erfassung der Ist-Geschwindigkeit kann in einer Überprüfungsphase 24 während des Ausrollvorgangs eine Überprüfung erfolgen. In der Überprüfung wird das tatsächliche Verhalten des Fahrzeugs mit dem nach dem Fahrzeugmodell erwarteten Verhalten verglichen. Dazu kann beispielsweise abhängig von dem bei 23 erfassten Geschwindigkeitsverlauf 53 der Ausrollweg erneut berechnet werden. Alternativ oder zusätzlich kann bestimmt werden, welche Geschwindigkeit ausgehend von den erfassten Ist-Geschwindigkeitswerten bei der Position 52 erwartet wird. Ein erweitertes Kalman-Filter kann bei der Überprüfung in der Überprüfungsphase 24 eingesetzt werden. Abhängig von einem Vergleich der aus der Überprüfung vorhergesagten Endgeschwindigkeit an der Position 52 und der Zielgeschwindigkeit kann ein Warnsignal ausgegeben werden, beispielsweise wenn die Geschwindigkeiten um mehr als einen Schwellenwert voneinander verschieden sind. Nach dem Ende des Ausrollvorgangs, also beispielsweise wenn der Fahrer wieder einen Gang einlegt und so ein Freilaufmanöver beendet und/oder wenn der Fahrer wieder ein Gaspedal oder eine Bremse betätigt, wird in einer Adaptionsphase 25 eine Adaption durchgeführt. Dabei wird ein adaptierter Wert für wenigstens einen Fahrwiderstandsparameter, der die Ausrollwegberechnung beeinflusst, bestimmt.

Der adaptierte Wert oder die adaptierten Werte für den wenigstens einen Fahrwiderstandsparameter, der bzw. die bei der Adaption in der Adaptionsphase 25 ermittelt wird bzw. werden, kann bzw. können bei einer Berechnung eines weiteren Ausrollwegs 56 in einer späteren Berechnungsphase 32 verwendet werden. Die Berechnung des weiteren Ausrollwegs 56 in der Berechnungsphase 32 erfolgt nach der Adaption in der Adaptionsphase 25 und als Vorsteuerung vor einem weiteren Ausrollvorgang 31. Die aus der Adaption in der Adaptionsphase 25 resultierenden adaptierten Werte für Fahrwiderstandsparameter werden als Initialwerte für die Berechnung des weiteren Ausrollwegs in der Berechnungsphase 32 verwendet. Eine weitere Anfangsgeschwindigkeit 54 und/oder eine weitere Zielgeschwindigkeit 55 für den weiteren Ausrollvorgang 31 können von der Anfangs- und/oder Zielgeschwindigkeit des Ausrollvorgangs 21, aus dem die adaptierten Werte für die Fahrwiderstandsparameter gewonnen wurden, verschieden sein. Die Erfassung von Geschwindigkeitswerten während des weiteren Ausrollvorgangs 31 in der Beobachtungsphase 33, eine Überprüfung in einer Überprüfungsphase 34 und eine Adaption in einer Adaptionsphase 35 nach dem Ende des Ausrollvorgangs 31 können erneut durchgeführt werden. Die adaptierten Werte, die nach dem weiteren Ausrollvorgangs 31 gewonnen werden, können bei der Berechnung eines weiteren Ausrollwegs in einer Berechnungsphase 42 vor einem weiteren Ausrollvorgangs 41 verwendet werden. Die Erfassung von Geschwindigkeitswerten während des weiteren Ausrollvorgangs 41 in einer Beobachtungsphase 43 parallel zum Ausrollvorgang, eine Überprüfung in einer Überprüfungsphase 44 während des Ausrollvorgangs und eine Adaption in einer Adaptionsphase 45 nach dem Ende des Ausrollvorgangs 41 können erneut durchgeführt werden.

Verschiedene Methoden können eingesetzt werden, um adaptierte Werte für Fahrwiderstandsparameter zu ermitteln. Beispielsweise kann, wie noch ausführlicher beschrieben werden wird, ein lineares Gleichungssystem in Fahrwiderstandsparametern abhängig von den erfassten Geschwindigkeiten aufgestellt und von der Recheneinrichtung 3 gelöst werden, um die adaptierten Werte zu bestimmen. Alternativ oder zusätzlich können verbesserte Werte für Fahrwiderstandsparameter auch abhängig von dem erweiterten Kalman-Filter, das zur Überprüfung während des Ausrollvorgangs eingesetzt wird, ermittelt werden. Die Fahrwiderstandsparameter, deren Werte adaptiert werden, können einen Rollreibungskoeffizienten bzw. Beiwert der Rollreibung umfassen. Die Fahrwiderstandsparameter, deren Werte adaptiert werden, können einen Beiwert des Luftwiderstands umfassen. Die Fahrwiderstandsparameter, deren Werte adaptiert werden, können eine Geschwindigkeitskomponente des Windes, gemessen in einem Weltkoordinatensystem, umfassen, die parallel zur Fahrtrichtung des Fahrzeugs während des Ausrollvorgangs ist. Informationen aus mehreren Ausrollvorgängen können zur Adaption kombiniert werden. Beispielsweise kann eine Adaption abhängig davon erfolgen, auf wie vielen vorherigen Ausrollvorgängen die aktuellen Werte der Fahrwiderstandsparameter beruhen.

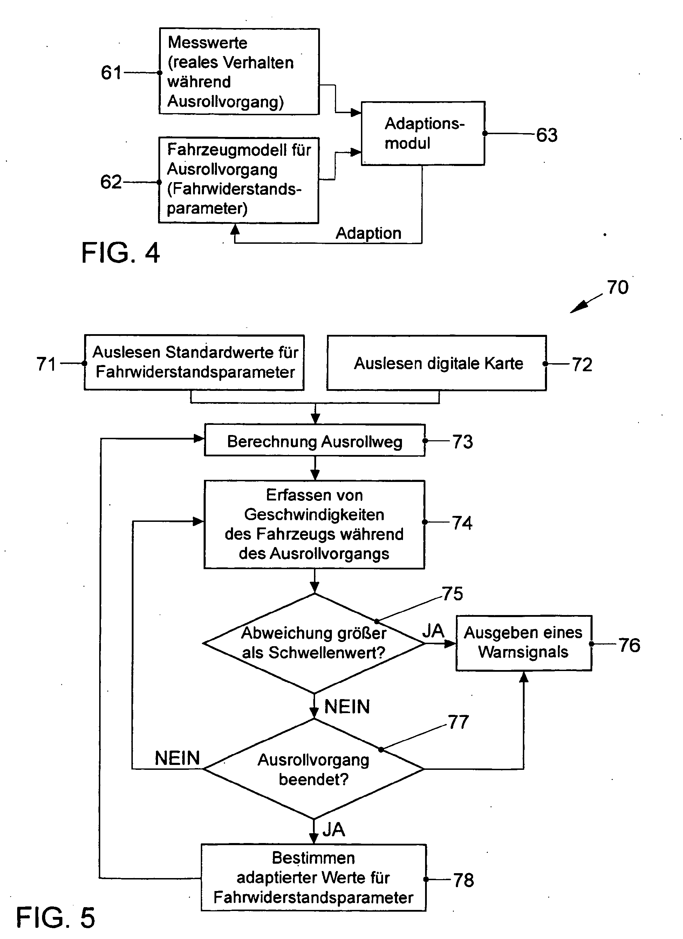

Fig. 4 veranschaulicht die Funktionsweise der Steuereinrichtung 2 des Fahrzeugs 1 bei der Adaption von Werten für Fahrwiderstandsparameter. Die Steuereinrichtung verwendet Messwerte 61, die das beobachtete tatsächliche Verhalten des Fahrzeugs 1 während des Ausrollvorgangs angeben, und das nach einem Fahrzeugmodell 62 abhängig von Fahrwiderstandsparametern vorhergesagte Verhalten des Fahrzeugs 1 als Eingangsdaten. Diese werden einem Vergleich 63 unterzogen. Abhängig von dem Vergleich 63 können Fahrwiderstandsparameter des Fahrzeugmodells 62 adaptiert werden. Der Vergleich 63 kann das Lösen eines Gleichungssystems beinhalten, das von den Fahrwiderstandsparametern, von während des Ausrollvorgangs erfassten Geschwindigkeiten des Fahrzeugs und von daraus rechnerisch abgeleiteten Beschleunigungen abhängt.

Fig. 5 zeigt einen Ablaufplan eines Verfahrens 70 nach einem Ausführungsbeispiel. Das Verfahren 70 kann von der Steuereinrichtung 2 des Fahrzeugs 1 ausgeführt werden.

Nachdem das Fahrzeug in Betrieb genommen wird, werden bei 71 Standardwerte für Fahrwiderstandsparameter ausgelesen. Bei 72 wird eine elektronische Karte ausgelesen. Bei 73 wird abhängig von den Standardwerten für die Fahrwiderstandsparameter und Informationen aus der digitalen Karte ein Ausrollweg berechnet. Der Ausrollweg kann für Freilauf und/oder Schubabschaltung berechnet werden. Wenigstens einige der Fahrwiderstandsparameter können von einem eingelegten Gang abhängen. Auf diese Weise kann unterschiedliches Verhalten einer Motorbremse bei Schubabschaltung abhängig vom eingelegten Gang berücksichtigt werden. Das Berechnen des Ausrollwegs bei 73 erfolgt als Vorsteuerung vor einem Ausrollvorgang. Ein Signal kann abhängig von dem berechneten Ausrollweg ausgegeben werden, beispielsweise um den Fahrer zu einer bestimmten Fahrweise zu veranlassen.

Bei 74 wird während eines Ausrollvorgangs die Geschwindigkeit des Fahrzeugs erfasst. Die Erfassung einer Ist-Geschwindigkeit während des Ausrollvorgangs kann mit einer vorherbestimmten Rate durchgeführt werden.

Bei 75 wird während des Ausrollvorgangs überprüft, ob das tatsächliche Verhalten des Fahrzeugs während des Ausrollvorgangs von dem nach dem Fahrzeugmodell mit den aktuellen Werten für die Fahrwiderstandsparameter erwarteten Verhalten signifikant abweicht. Dazu kann beispielsweise ein erweitertes Kalman-Filter eingesetzt werden, das die Messwerte der Ist-Geschwindigkeit verwendet, um immer bessere Abschätzungen für die Endgeschwindigkeit am Ende des rechnerisch ermittelten Ausrollwegs zu bestimmen. Falls die Endgeschwindigkeit um mehr als einen Schwellenwert über der Zielgeschwindigkeit liegt, kann bei 76 ein Warnsignal ausgegeben werden.

Das Verfahren fährt bei 77 mit einer Überprüfung fort, ob der Ausrollvorgang beendet ist. Die Überprüfung bei 77 kann abhängig davon erfolgen, ob ein Fahrer einen Freilauf-Betriebszustand durch Einlegen eines Gangs beendet. Die Überprüfung bei 77 kann abhängig davon erfolgen, ob ein Fahrer einen Schubabschaltungs-Betriebszustand beendet, indem er aktiv die Bremse oder das Gaspedal betätigt. Falls der Ausrollvorgang nicht beendet ist, werden die Erfassung der Bewegung des Fahrzeugs und die Überprüfung des tatsächlichen Verhaltens während des Ausrollvorgangs fortgesetzt. Das Verfahren kehrt zu 74 zurück.

Nach dem Ende des Ausrollvorgangs wird bei 78 ein adaptierter Wert für wenigstens einen Fahrwiderstandsparameter bestimmt. Die Bestimmung des adaptierten Werts für den wenigstens einen Fahrwiderstandsparameter erfolgt abhängig von den Geschwindigkeiten, die während des Ausrollvorgangs bei 74 erfasst wurden. Das Verfahren kehrt zu 73 zurück, um einen weiteren Ausrollweg zu berechnen. Dabei wird der adaptierte Wert für den wenigstens einen Fahrwiderstandsparameter berücksichtigt. Die Berechnung des weiteren Ausrollwegs berücksichtigt, dass sich Anfangs- und/oder Zielgeschwindigkeit und/oder Straßensteigung geändert haben können. Falls mehr als ein Adaptionsvorgangs durchgeführt wurde und in der Adaption die Geschwindigkeit und Richtung des Winds, gemessen in einem Weltkoordinatensystem, ermittelt wurden, kann bei der weiteren Berechnung bei 73 auch die Richtung der Straße, auf der das Fahrzeug während des weiteren Ausrollvorgangs fährt, relativ zur Windrichtung berücksichtigt werden

Wenn der Betriebszustand des Fahrzeugs beendet wird, beispielsweise wenn das Fahrzeug abgestellt wird oder der Motor länger als ein vorherbestimmter Zeitraum deaktiviert bleibt, können die adaptierten Werte oder wenigstens einige der adaptierten Werte für Fahrwiderstandsparameter gelöscht werden. Es können selektiv diejenigen adaptierten Werte für Fahrwiderstandsparameter gelöscht werden, die einen Rückschluss auf die befahrene Strecke erlauben.

Verschiedene Fahrzeugmodelle können verwendet werden, um das Verhalten des Fahrzeugs bei Verfahren und Steuereinrichtungen nach Ausführungsbeispielen zu beschreiben. Eine Implementierung wird nachfolgend ausführlicher beschrieben.

Die auf das Fahrzeug wirkenden Kräfte können in der Form

$$F_{Schub} = F_{Luft} + F_{Roll} + F_{Steigung} + F_{Beschleunigung} \qquad (1)$$

dargestellt werden. Dabei bezeichnet $F_{Schub}$ eine Kraft aufgrund des Motormoments, das in einem Ausrollvorgang gleich Null (Freilauf) oder negativ (Schubabschaltung mit Motorbremse) sein kann. Die Kraft $F_{Schub}$ kann in guter Näherung als quadratischer Ausdruck in der Geschwindigkeit des Fahrzeugs angegeben werden.

Die Kraft

$$\begin{aligned} F_{Luft} &= \frac{\rho}{2} \cdot C_w A_{eff} \cdot \left(v + v_{Wind,p}\right)^2 \\ &= \frac{\rho}{2} \cdot C_w A_{eff} \cdot v_\infty^2 \end{aligned} \qquad (2)$$

bezeichnet die Luftwiderstandskraft. Mit v ist die aktuelle Geschwindigkeit des Fahrzeugs bezeichnet, $V_{Wind,p}$ bezeichnet die Geschwindigkeitskomponente der Windgeschwindigkeit, die in einem Weltkoordinatensystem entlang der Bewegungsrichtung des Fahrzeugs gerichtet ist, und $\rho$ bezeichnet die Luftdichte. Der Wert für die Luftdichte kann abhängig von Druck- und/oder Temperaturwerten bestimmt werden. Der $C_w A_{eff}$-Wert bezeichnet das Produkt aus effektivem Luftwiderstandsbeiwert und effektiver Fläche. Der Wert kann sich aus mehreren Beiträgen zusammensetzen, beispielsweise in der Form

$$C_w A_{eff} = c_w A_f + c_f A_w, \qquad (3)$$

wobei der erste Term auf der rechten Seite von Gleichung (3) vom $c_w$-Wert des Fahrzeugs und einer Stirnfläche $A_f$ abhängt und der zweite Term auf der rechten Seite von Gleichung (3) Oberflächeneffekte berücksichtigt.

Die Kraft

$$F_{Roll} = f_r \cdot m_F \cdot g \cdot \cos(\alpha) \qquad (4)$$

bezeichnet die Rollreibungskraft, wobei $f_r$ der Rollreibungskoeffizient oder Beiwert des Rollwiderstands ist, $m_F$ die Fahrzeugmasse ist, g die Beschleunigungskonstante der Schwerkraft ist und $\alpha$ den Neigungswinkel der Straße bezeichnet. Die Kraft

$$F_{Steigung} = m_F \cdot g \cdot \sin(\alpha) \qquad (5)$$

ist die Komponente der Schwerkraft, die parallel zur Straßenoberfläche wirkt.

Die Beschleunigungskraft

$$F_{Beschleunigung} = \lambda \cdot m_F \cdot \ddot{x} = \lambda \cdot m_F \cdot \dot{v} \qquad (6)$$

ist die eine Geschwindigkeitsänderung des Fahrzeugs hervorrufende resultierende Kraft. Hierbei bezeichnet $\lambda$ einen Drehmassenzuschlagfaktor. Der Drehmassenzuschlagfaktor $\lambda$ ist abhängig vom gewählten Gang. Die Stellung der Gangschaltung kann bei der Adaption und bei der Berechnung des Ausrollwegs entsprechend berücksichtigt werden.

Die Bewegungsgleichung des Fahrzeugs kann in der Form

$$\ddot{x} = \dot{v} = -\frac{f_r \cdot g \cdot \cos(\alpha)}{\lambda} - \frac{g \cdot \sin(\alpha)}{\lambda} - \frac{C_w A_{eff} \cdot \rho \cdot v_\infty^2}{2 \cdot \lambda \cdot m_F} - K_2 \cdot v^2 - K_1 \cdot v - K_0 \quad (7)$$

dargestellt werden. Dabei bezeichnen $K_2$, $K_1$ und $K_0$ Schubkoeffizienten, wenn die Schubkraft bzw. das Motormoment als quadratischer Ausdruck in der Geschwindigkeit v des Fahrzeugs angegeben wird. Die Schubkoeffizienten hängen vom Gang ab. Die Schubkoeffizienten können als bekannt angenommen werden.

Gleichung (7) dient zur rechnerischen Beschreibung der Bewegung des Fahrzeugs und somit als Fahrzeugmodell. Verschiedene Fahrwiderstandsparameter gehen in das Modell ein, beispielsweise der $C_w A_{eff}$-Wert des Fahrzeugs, der Beiwert der Rollreibung $f_r$ oder die Komponente der Windgeschwindigkeit, die parallel zur Ausrollrichtung ist und die in $v_\infty = v + v_{Wind,p}$ eingeht.

Es kann eine Ersatzbeschleunigung

$$a^* = \ddot{x} + \frac{g \cdot \sin(\alpha)}{\lambda} + K_2 \cdot v^2 + K_1 \cdot v + K_0 \qquad (8)$$

definiert werden, die von der Beschleunigung $d^2x dt^2 = dv/dt$, der Steigung der Straße und der aktuellen Geschwindigkeit abhängt. Durch Messung der Geschwindigkeit zu mehreren Zeiten während eines Ausrollvorgangs kann durch Differenzbildung auch $d^2x/dt^2 = dv/dt$ bestimmt werden. Es kann folglich die Ersatzbeschleunigung a* für mehrere Zeitpunkte während des Ausrollvorgangs aus den gemessenen Geschwindigkeiten bestimmt werden.

Gleichung (7) kann umgeschrieben werden in der Form

$$a^* = -\frac{f_r \cdot g \cdot \cos(\alpha)}{\lambda} - \frac{C_w A_{eff} \cdot \rho \cdot v_\infty^2}{2 \cdot \lambda \cdot m_F}, \qquad (9)$$

wobei der Ausdruck auf der rechten Seite von Fahrwiderstandsparametern $f_r$, $C_w A_{eff}$ und $v_{Wind,p}$ abhängt. Diese Parameter sind Parameter des Fahrzeugmodells. Die Fahrwiderstandsparameter sind nicht von der Geschwindigkeit des Fahrzeugs abhängig. Die Fahrwiderstandsparameter $f_r$, $C_w A_{eff}$ und $v_{Wind,p}$ repräsentieren physikalische Parameter, die die Bewegung des Fahrzeugs beeinflussen.

Ziel der Adaption ist, aus dem beobachteten Verhalten des Fahrzeugs während des Ausrollvorgangs adaptierte Werte für die Fahrwiderstandsparameter zu bestimmen, mit denen das tatsächliche Verhalten des Fahrzeugs besser beschrieben wird. Dadurch kann die Übereinstimmung zwischen Fahrzeugmodell und tatsächlichem Verhalten des Fahrzeugs verbessert werden. Wenn die Adaption basierend auf Daten durchgeführt wird, die während eines Ausrollvorgangs erfasst werden, könne unbekannte Einflüsse von Motor und Getriebe bei der Adaption reduziert oder eliminiert werden.

Durch Einsetzen von

$$v_\infty = v + v_{Wind,p} = v + v_{Wind} \cdot \cos(\beta), \qquad (10)$$

wobei β den Winkel zwischen Fahrrichtung und Windrichtung bezeichnet, kann Gleichung (9) in der Form

$$a^* = -\frac{f_r \cdot g \cdot \cos(\alpha)}{\lambda} - \frac{C_w A_{eff} \cdot \rho \cdot (v + v_{Wind,p})^2}{2 \cdot \lambda \cdot m_F}$$
$$= A \cdot v^2 + 2 \cdot A \cdot v \cdot v_{Wind,p} - \frac{f_r \cdot g \cdot \cos(\alpha)}{\lambda} - \frac{C_w A_{eff} \cdot \rho \cdot v_{Wind,p}^2}{2 \cdot \lambda \cdot m_F} \qquad (11)$$

dargestellt werden. Dabei ist der Koeffizient A definiert als

$$A = \frac{C_w A_{eff} \cdot \rho}{2 \cdot \lambda \cdot m_F} \cdot \qquad (12)$$

Gleichung (11) kann direkt rechnerisch gelöst werden. Dazu kann aus den Geschwindigkeiten, die zu mehreren diskreten Zeiten während des Ausrollvorgangs erfasst werden, die jeweilige Ersatzbeschleunigung a* gemäß Gleichung (8) berechnet werden. Mit den bekannten Geschwindigkeitswerten v steht, wenn Geschwindigkeiten für mindestens vier Zeitpunkte während des Ausrollvorgangs erfasst werden, ein Gleichungssystem mit drei Gleichungen für die Fahrwiderstandsparameter $f_r$, $C_w A_{eff}$ und $v_{Wind,p}$ zur Verfügung.

Eine weitere Vereinfachung kann erreicht werden, indem die a*-Werte für zwei aufeinanderfolgende Zeitpunkte während des Ausrollvorgangs voneinander subtrahiert werden. Wenn diese Zeitpunkte während des Ausrollvorgangs, zu denen die Geschwindigkeit des Fahrzeugs erfasst wird, mit einem Index k bezeichnet wird, gilt für die Differenz von a*(k+1) und a*(k) näherungsweise

$$\Delta a^*(k) = A \cdot \Delta v^2(k) + 2 \cdot A \cdot v_{Wind} \cdot \cos(\beta) \cdot \Delta v(k)$$
$$= A \cdot \Delta v^2(k) + C \cdot \Delta v(k) \qquad , \qquad (13)$$

wobei

$$C = 2 \cdot A \cdot v_{Wind,p} = 2 \cdot A \cdot v_{Wind} \cdot \cos(\beta) \qquad (14)$$

definiert wurde.

Bei der Herleitung von Gleichung (13) wurde ausgenutzt, dass durch die Differenzbildung die letzten beiden Terme auf der rechten Seite von Gleichung (11) eliminiert werden können. Die Steigung kann als Lipschitz-stetig angenommen werden, so dass die Differenz der Steigungen der Straße, auf denen das Fahrzeug sich zu den Zeiten k+1 und k befindet, vernachlässigt werden kann.

In Gleichung (13) ist

$$\Delta a^*(k) = a^*(k+1) - a^*(k), \qquad (15)$$

$$\Delta v^2(k) = v^2(k+1) - v^2(k) \quad \text{und} \qquad (16)$$

$$\Delta v(k) = v(k+1) - v(k). \qquad (17)$$

Die Ausdrücke (15)-(17) können aus den während des Ausrollvorgangs erfassten Geschwindigkeiten bestimmt werden. Die bei der Bestimmung der Ersatzbeschleunigungen gemäß Gleichungen (15) und (8) benötigte Beschleunigung des Fahrzeugs zu den Zeitpunkten k+1 und k kann durch Differenzbildung aus den gemessenen Geschwindigkeiten berechnet werden. Vor der Auswertung der Gleichungen (15)-(17) kann die gemessene Geschwindigkeit einer Tiefpassfilterung unterzogen werden. So kann die Robustheit der Adaption weiter erhöht werden.

Gleichung (13) kann als Matrixgleichung der Form

$$\begin{pmatrix} \Delta a^*(1) \\ \Delta a^*(2) \\ \Delta a^*(3) \\ \vdots \end{pmatrix} = \underbrace{\begin{pmatrix} \Delta v^2(1) & \Delta v(1) \\ \Delta v^2(2) & \Delta v(2) \\ \Delta v^2(3) & \Delta v(3) \\ \vdots & \vdots \end{pmatrix}}_{H} \begin{pmatrix} A \\ C \end{pmatrix} \qquad (18)$$

dargestellt werden. Stehen die a*- und Geschwindigkeitswerte für mehr als zwei Zeiten zur Verfügung, handelt es sich dabei um ein überbestimmtes Gleichungssystem. Das Gleichungssystem ist linear in den Parametern A und C. Eine Lösung kann mit der Methode der kleinsten Quadrate erfolgen. Dazu kann die Moore-Penrose-Pseudoinverse berechnet werden. Die Parameter A und C können aus den gemessenen Geschwindigkeiten bestimmt werden gemäß

$$\begin{pmatrix} A \\ C \end{pmatrix} = \left(H^T \cdot H\right)^{-1} \cdot H^T \begin{pmatrix} \Delta a^{\star}(1) \\ \Delta a^{\star}(2) \\ \Delta a^{\star}(3) \\ \vdots \end{pmatrix}. \qquad (19)$$

Aus den so ermittelten Werten für A und C ergeben sich gemäß Gleichungen (12) und (14) Werte für $C_wA_{eff}$ und $V_{Wind,p}$. Der adaptierte Wert für den Rollreibungskoeffizienten $f_r$ kann beispielsweise aus einer der Gleichungen der Form (11) ermittelt werden.

Es können alternativ oder zusätzlich adaptierte Werte von anderen Fahrwiderstandsparametern bestimmt werden. Informationen über die Bewegung des Fahrzeugs, die in mehreren Ausrollvorgängen gesammelt wurden, können miteinander kombiniert werden. Dies erlaubt es beispielsweise, den Betrag der Windgeschwindigkeit und eine Richtung der Windgeschwindigkeit in einem Weltkoordinatensystem aus der Auswertung zweier Ausrollvorgänge zu ermitteln. Voraussetzung ist, dass sich das Fahrzeug bei den beiden Ausrollvorgängen nicht entlang zweier paralleler oder identischer Richtungen bewegt. Die zwei Bewegungsvektor des Fahrzeugs in den zwei Ausrollvorgängen schließen einen Winkel ein, der von 0° und 180° verschieden ist.

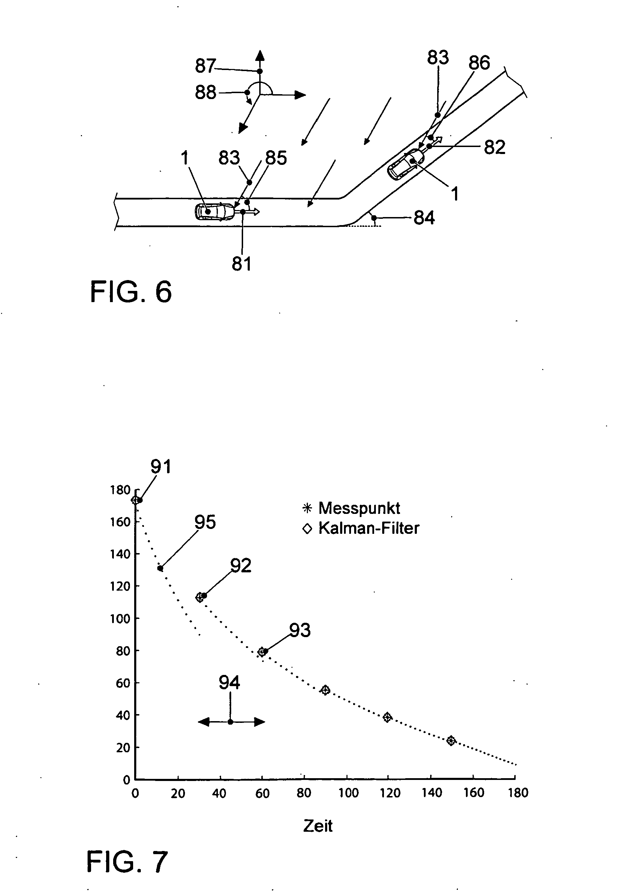

Fig. 6 veranschaulicht eine derartige Bestimmung des Betrags und der Richtung der Windgeschwindigkeit. In einem Ausrollvorgang bewegt sich das Fahrzeug 1 mit einer Bewegungsrichtung 81. Wie erläutert wird eine Komponente eines Windgeschwindigkeitsvektors 83, die parallel zur Bewegungsrichtung 81 ist, in der Adaption ermittelt. In einem weiteren Ausrollvorgang bewegt sich das Fahrzeug 1 mit einer weiteren Bewegungsrichtung 82. Wie erläutert kann eine Komponente des Windgeschwindigkeitsvektors 83, die parallel zur weiteren Bewegungsrichtung 82 ist, in einer weiteren Adaption ermittelt werden. Die Ermittlung dieser Komponente des Windgeschwindigkeit kann jeweils wie unter Bezugnahem auf Gleichungen (1) bis (19) beschrieben erfolgen.

Ein bei 84 dargestellter Winkel $\gamma$ zwischen de Bewegungsvektor 81 und dem weiteren Bewegungsvektor 82 kann aus der digitalen Karte ausgelesen werden. Der Winkel $\gamma$ entspricht einer Differenz zwischen einem Winkel 85, den der Windvektor 83 mit dem Bewegungsvektor 81 einschließt, und einem Winkel 86, den der Windvektor 83 mit dem weiteren Bewegungsvektor 82 einschließt. Aus der Windgeschwindigkeitskomponente entlang des Bewegungsvektors 81, der Windgeschwindigkeitskomponente entlang des weiteren Bewegungsvektors 82 und dem der digitalen Karte entnommenen Winkel $\gamma$ ermittelt die Steuereinrichtung 2 des Fahrzeugs 1 den Betrag der Windgeschwindigkeit und die Richtung 88 der Windgeschwindigkeit in einem Weltkoordinatensystem 87. Die Bestimmung der Windgeschwindigkeit und optional der Windrichtung kann abhängig von der Auswertung der erfassten Fahrzeugbewegung während des Ausrollvorgangs erfolgen. Ein separater Windgeschwindigkeitssensor ist nicht erforderlich.

Es können alternativ oder zusätzlich adaptierte Werte von anderen Fahrwiderstandsparametern bestimmt werden. Beispielsweise kann ein effektiver Wert für die Steigung einer Straße ermittelt werden, um im Vergleich zu einem in der digitalen Karte hinterlegten Wert die tatsächliche Bewegung des Fahrzeugs besser zu beschreiben.

Aus der Bewegung des Fahrzeugs während eines Ausrollvorgangs kann

$$a_0 = \lambda \cdot \ddot{x} + (F_{Luft} + F_{Schub})/m_F \qquad (20)$$

ermittelt werden. Die Beschleunigung im ersten Term auf der rechten Seite von Gleichung (20) kann durch Differenzbildung aus erfassten Geschwindigkeiten bestimmt werden. Der zweite Term auf der rechten Seite von Gleichung (20) kann abhängig von zuvor adaptierten Werten für Fahrwiderstandsparameter bestimmt werden, oder es können ältere Werte für die Fahrwiderstandsparameter verwendet werden.

Ein Korrekturterm $\Delta\alpha$ für die Steigung, um den ein in der elektronischen Karte hinterlegter Wert $\alpha_m$ korrigiert werden muss, um das Verhalten des Fahrzeugs besser zu beschreiben, kann gemäß

$$\Delta\alpha = \frac{a_0/g + f_r \cdot \cos(\alpha_m) + \sin(\alpha_m)}{f_r \cdot \sin(\alpha_m) + \cos(\alpha_m)} \qquad (21)$$

ermittelt werden.

Weitere Maßnahmen können ergriffen werden, um sich ändernde Umwelteinflüsse bei der Berechnung des Ausrollwegs zu berücksichtigen. Beispielsweise können ein Umgebungsdruck $p_{amb}$ und eine Umgebungstemperatur $T_{amb}$ der Luft erfasst werden, um die Luftdichte, die in die Luftwiderstandskraft eingeht, gemäß

$$\rho = \frac{p_{amb}}{R \cdot T_{amb}} \tag{22}$$

zu berechnen. Dabei bezeichnet R die allgemeine Gaskonstante.

Die adaptierten Werte für einen oder mehrere Fahrwiderstandsparameter werden bei der nachfolgenden Berechnung eines weiteren Ausrollwegs verwendet. Die Berechnung von Ausrollwegen kann auf verschiedene Weisen erfolgen. Beispielsweise kann Gleichung (7) numerisch integriert werden. Bei weiteren Ausgestaltungen kann auch ein geschlossener Ausdruck für einen Ausrollweg in der Anfangs- und Zielgeschwindigkeit verwendet werden, um den Ausrollweg zu berechnen. Falls die Steigung in einem Streckenabschnitt vor Erreichen einer Geschwindigkeitsbegrenzung auf eine Zielgeschwindigkeit als Konstant mit Neigungswinkel $\alpha$ angenommen werden kann, kann

$$d = \frac{g}{\lambda}\left(f_r \cdot \cos(\alpha) + \sin(\alpha)\right) \tag{23}$$

definiert werden.

Falls die Windgeschwindigkeit des Winds im Weltkoordinatensystem entlang der Bewegungsrichtung während des Ausrollvorgangs vernachlässigt wird oder diese Komponente nicht bekannt ist, kann der Ausrollweg für den Freilauf-Betriebszustand ausgedrückt werden als

$$x(v_Z, v_A) = \frac{1}{A} \cdot \ln\left[\frac{\left|\cos\left(\arctan\left(v_Z \cdot \sqrt{A}/\sqrt{d}\right)\right)\right|}{\left|\cos\left(\arctan\left(v_A \cdot \sqrt{A}/\sqrt{d}\right)\right)\right|}\right], \tag{24}$$

wobei A und d wie in Gleichungen (12) und (23) angegeben definiert sind.

Falls die Komponente der Windgeschwindigkeit, die im Weltkoordinatensystem entlang der Bewegungsrichtung des Fahrzeugs auf dem Ausrollweg gerichtet ist, bekannt ist, beispielsweise aus einer vorangegangenen Adaption, kann der Ausrollweg für den Freilauf-Betriebszustand ausgedrückt werden als

$$x(v_Z, v_A) = \frac{1}{A} \cdot \ln\left|\cos\left[\arctan\left((v_Z + v_{Wind,p}) \cdot \sqrt{A/d}\right)\right]\right| - \frac{1}{A} \cdot \ln\left|\cos\left[\arctan\left((v_A + v_{Wind,p}) \cdot \sqrt{A/d}\right)\right]\right|$$

$$+ \frac{v_{Wind,p}}{\sqrt{A \cdot d}} \arctan\left((v_Z + v_{Wind,p}) \cdot \sqrt{A/d}\right) - \frac{v_{Wind,p}}{\sqrt{A \cdot d}} \arctan\left((v_A + v_{Wind,p}) \cdot \sqrt{A/d}\right)$$

$$\tag{25}$$

wobei $v_{Wind,p}$ die Komponente der Windgeschwindigkeit ist, die im Weltkoordinatensystem entlang der Bewegungsrichtung des Fahrzeugs auf dem Ausrollweg gerichtet ist.

Andere Techniken zur Bestimmung der adaptierten Werte von einem oder mehreren Fahrwiderstandsparametern können verwendet werden. Beispielsweise können anstelle der Lösung eines Gleichungssystems mit der Methode der kleinsten Quadrate, wie sie unter Bezugnahm auf Gleichungen (1) bis (19) beschrieben wurde, Informationen über adaptierte Werte der Fahrzeugparameter auch aus der Überprüfung gewonnen werden, die während des Ausrollvorgangs des Fahrzeugs durchgeführt wird. Eine derartige Überprüfung ist in Fig. 3 in den Phasen 24, 34 und 44 schematisch dargestellt. Eine derartige Überprüfung ist auch in Fig. 5 bei 75 dargestellt. Die Überprüfung kann mit einem erweiterten Kalman-Filter durchgeführt werden. Das erweiterte Kalman-Filter erlaubt die Berücksichtigung nicht-linearer Terme in der Bewegungsgleichung des Fahrzeugs.

Fig. 7 zeigt schematisch die Wirkungsweise des erweiterten Kalman-Filters. Ausgehend von einer gemessenen Anfangsgeschwindigkeit 91 liefert das erweiterte Kalman-Filter a priori-Schätzungen 95 für den Zustand des Fahrzeugs zu späteren Zeitpunkten. Wird erneut eine Messung durchgeführt, beispielsweise bei 92 oder 93, erfolgt eine Anpassung an das Messergebnis (a posteriori-Schätzung). Durch Wiederholung der Geschwindigkeitsmessung mit einem zeitlichen Abstand 94 kann die Übereinstimmung des vorhergesagten Verlaufs mit dem tatsächlichen Verlauf der Geschwindigkeit verbessert werden. Dies kann mit einer Anpassung der Werte für Fahrwiderstandsparameter einhergehen. Die angepassten Werte für Fahrwiderstandsparameter, die das erweiterte Kalman-Filter liefert, können ebenfalls bei der Adaption eingesetzt werden, um bei nachfolgenden Berechnungen eines Ausrollwegs zur Verfügung zu stehen.

Während Verfahren und Steuereinrichtungen nach Ausführungsbeispielen beschrieben wurden, können Abwandlungen bei weiteren Ausführungsbeispielen realisiert werden. Beispielsweise kann eine Beobachtung einer Bewegung des Fahrzeugs während eines Ausrollvorgangs auch die Messung von Beschleunigungen beinhalten, die bei der Bestimmung adaptierter Werte für Fahrwiderstandsparameter verwendet werden können. Es können die Werte anderer oder zusätzlicher Fahrwiderstandsparameter adaptiert werden, um neben einer Rollreibungsadaption und einer Luftwiderstandsadaption auch andere Modellparameter so anzupassen, dass das tatsächliche Verhalten des Fahrzeugs genauer beschrieben wird.

Bei Ausführungsbeispielen wird eine Adaption von Fahrwiderstandsparametern abhängig von einer Bewegung des Fahrzeugs durchgeführt, die während eines Ausrollvorgangs beobachtet wurde. Dadurch werden Einflüsse des Motormoments, die die Adaption beeinflussen können, klein gehalten oder eliminiert.

**Patentansprüche**

1. Verfahren zum Betreiben eines Fahrzeugs (1), umfassend:

   - Ermitteln eines Ausrollwegs (17, 18) des Fahrzeugs (1) in Abhängigkeit von Werten für eine Mehrzahl von Fahrwiderstandsparametern,
   - Erfassen einer Bewegung (53) des Fahrzeugs (1) zu mehreren Zeiten während eines Ausrollvorgangs (21), bei dem ein Freilauf-Betriebszustand oder ein Schubabschaltungs-Betriebszustand des Fahrzeugs (1) vorliegt und sich das Fahrzeug (1) ausgehend von einer Anfangsgeschwindigkeit bis zu einer Zielgeschwindigkeit verlangsamt,
   - Bestimmen eines adaptierten Werts für wenigstens einen Fahrwiderstandsparameter der Mehrzahl von Fahrwiderstandsparametern in Abhängigkeit von der erfassten Bewegung (53) des Fahrzeugs (1),
   wobei der adaptierte Wert für den wenigstens einen Fahrwiderstandsparameter zum nachfolgenden Ermitteln eines weiteren Ausrollwegs (56) von einer weiteren Anfangsgeschwindigkeit (54) bis zu einer weiteren Zielgeschwindigkeit (55) verwendet wird, **dadurch gekennzeichnet,**
   **dass** der adaptierte Wert wenigstens für den folgenden Fahrwiderstandsparameter bestimmt wird:
   - eine Windgeschwindigkeitskomponente entlang einer Fahrtrichtung (81, 82) des Fahrzeugs (1) während des Ausrollvorgangs.

2. Verfahren nach Anspruch 1, wobei das Verfahren weiterhin umfasst:

   - Erfassen einer Bewegung (53) des Fahrzeugs (1) zu mehreren Zeiten während eines weiteren Ausrollvorgangs, wobei eine Fahrtrichtung (81) des Fahrzeugs (1) während des Ausrollvorgangs und eine Fahrtrichtung (82) des Fahrzeugs (1) während des weiteren Ausrollvorgangs voneinander verschieden sind;
   wobei der adaptierte Wert wenigstens für die folgenden Fahrwiderstandsparameter bestimmt wird:
   - einen Betrag einer Windgeschwindigkeit (83) und
   - eine Windrichtung (88).

3. Verfahren nach Anspruch 1 oder Anspruch 2,
   wobei der adaptierte Wert für wenigstens einen der folgenden Fahrwiderstandsparameter bestimmt wird:

   - einen Luftwiderstandsbeiwert des Fahrzeugs (1); und/oder
   - eine Straßensteigung; und/oder
   - einen Rollwiderstandsbeiwert des Fahrzeugs (1).

4. Verfahren nach einem der vorhergehenden Ansprüche,
   wobei das Bestimmen des adaptierten Werts für den wenigstens einen Fahrwiderstandsparameter nach dem Ausrollvorgang (21) durchgeführt wird.

**5.** Verfahren nach einem der vorhergehenden Ansprüche,
wobei das Erfassen der Bewegung des Fahrzeugs (1) zu mehreren Zeiten während des Ausrollvorgangs (21) umfasst:

Erfassen einer Geschwindigkeit (53) des Fahrzeugs (1) während des Ausrollvorgangs mit einer zeitlichen Rate.

**6.** Verfahren nach Anspruch 5,
wobei das Erfassen der Bewegung des Fahrzeugs (1) zu mehreren Zeiten während des Ausrollvorgangs (21) umfasst:

Bestimmen einer Beschleunigung des Fahrzeugs (1) während des Ausrollvorgangs aus der erfassten Geschwindigkeit (53), so dass Beschleunigungswerte mit einer Abtastrate vorliegen, die der zeitlichen Rate entspricht.

**7.** Verfahren nach Anspruch 5 oder Anspruch 6,
wobei das Bestimmen des adaptierten Werts für den wenigstens einen Fahrwiderstandsparameter umfasst:

Bestimmen des adaptierten Werts basierend auf einem Gleichungssystem, das linear in einer Windgeschwindigkeitskomponente entlang einer Fahrtrichtung (81, 82) des Fahrzeugs (1) während des Ausrollvorgangs und linear in einem Luftwiderstandsbeiwert des Fahrzeugs (1) ist.

**8.** Verfahren nach Anspruch 7,
wobei der adaptierte Wert für den wenigstens einen Fahrwiderstandsparameter mit der Methode der kleinsten Quadrate bestimmt wird.

**9.** Verfahren nach einem der Ansprüche 5-8,
wobei die Geschwindigkeit (53) des Fahrzeugs (1) zu mindestens drei Zeiten während des Ausrollvorgangs (21) erfasst wird.

**10.** Verfahren nach einem der vorhergehenden Ansprüche,
wobei das Bestimmen des adaptierten Werts für den wenigstens einen Fahrwiderstandsparameter abhängig von in einer digitalen Karte hinterlegten Daten durchgeführt wird.

**11.** Verfahren nach einem der vorhergehenden Ansprüche, wobei das Verfahren weiterhin umfasst:

- Überprüfen einer Geschwindigkeit am Ende des Ausrollwegs (17, 18, 56) und/oder einer Länge des Ausrollwegs (17, 18, 56) während des Ausrollvorgangs abhängig von der erfassten Bewegung (53) des Fahrzeugs (1),
- abhängig von einem Ergebnis des Überprüfens, selektives Ausgeben eines Warnsignals während des Ausrollvorgangs.

**12.** Steuereinrichtung für ein Fahrzeug (1), umfassend:

eine Schnittstelle (4) zum Empfangen von Daten, die eine Bewegung (53) des Fahrzeugs (1) zu mehreren Zeiten während eines Ausrollvorgangs (21), bei dem ein Freilauf-Betriebszustand oder ein Schubabschaltungs-Betriebszustand des Fahrzeugs (1) vorliegt und sich das Fahrzeug (1) ausgehend von einer Anfangsgeschwindigkeit bis zu einer Zielgeschwindigkeit verlangsamt, beschreiben; und
eine elektronische Recheneinrichtung (3), die mit der Schnittstelle (4) gekoppelt ist und die eingerichtet ist, um

- einen Ausrollweg (17, 18, 56) des Fahrzeugs (1) in Abhängigkeit von Werten für eine Mehrzahl von Fahrwiderstandsparametern zu ermitteln,
- einen adaptierten Wert für wenigstens einen Fahrwiderstandsparameter der Mehrzahl von Fahrwiderstandsparametern in Abhängigkeit von den empfangenen Daten zu bestimmen, und
- den adaptierten Wert für den wenigstens einen Fahrwiderstandsparameter zum nachfolgenden Ermitteln eines weiteren Ausrollwegs (56) von einer weiteren Anfangsgeschwindigkeit (54) bis zu einer weiteren Zielgeschwindigkeit (55) zu verwenden, **dadurch gekennzeichnet,**

**dass** die elektronische Recheneinrichtung (3) eingerichtet ist, um den adaptierten Wert wenigstens für den folgenden Fahrwiderstandsparameter zu bestimmen:

- eine Windgeschwindigkeitskomponente entlang einer Fahrtrichtung (81, 82) des Fahrzeugs (1) während des Ausrollvorgangs.

13. Steuereinrichtung nach Anspruch 12,
die zur Durchführung des Verfahrens nach einem der Ansprüche 2 bis 11 eingerichtet ist.

14. Fahrzeug, umfassend die elektronische Steuereinrichtung (2) nach Anspruch 12 oder Anspruch 13.

**Claims**

1. Method for operating a vehicle (1), comprising:

   - determining a coasting distance (17, 18) of the vehicle (1) as a function of values for a multiplicity of driving resistance parameters,
   - sensing a movement (53) of the vehicle (1) at a plurality of times during a coasting process (21) during which a freewheeling operating state or overrun cutoff operating state of the vehicle (1) is present and the vehicle (1) is slowing down to a target speed from an initial speed,
   - determining an adapted value for at least one driving resistance parameter of the multiplicity of driving resistance parameters as a function of the sensed movement (53) of the vehicle (1),
   wherein the adapted value for the at least one driving resistance parameter is used for subsequent determination of a further coasting distance (56) to a further target speed (55) from a further initial speed, **characterized in that** the adapted value is determined at least for the following driving resistance parameter:
   - a wind speed component in a driving direction (81, 82) of the vehicle (1) during the coasting process.

2. Method according to Claim 1, wherein the method also comprises:

   - sensing a movement (53) of the vehicle (1) at a plurality of times during a further coasting process, wherein a driving direction (81) of the vehicle (1) during the coasting process and a driving direction (82) of the vehicle (1) during the further coasting process are different from one another;
   - wherein the adapted value is determined at least for the following driving resistance parameters:
   - an absolute value of a wind speed (83) and
   - a wind direction (88).

3. Method according to Claim 1 or Claim 2,
wherein the adapted value is determined for at least one of the following driving resistance parameters:

   - an air resistance co-efficient of the vehicle (1); and/or
   - a gradient of the road; and/or
   - a rolling resistance co-efficient of the vehicle (1).

4. Method according to one of the preceding claims, wherein the determination of the adapted value is carried out for the at least one driving resistance parameter after the coasting process (21).

5. Method according to one of the preceding claims, wherein the sensing of the movement of the vehicle (1) at a plurality of times during the coasting process (21) comprises:

   sensing a speed (53) of the vehicle (1) during the coasting process with a chronological rate.

6. Method according to Claim 5,
wherein the sensing of the movement of the vehicle (1) at a plurality of times during the coasting process (21) comprises:

   determining an acceleration of the vehicle (1) during the coasting process from the sensed speed (53), with the result that acceleration values are present with a sampling rate which corresponds to the chronological rate.

7. Method according to Claim 5 or Claim 6,
wherein the determination of the adapted value for the at least one driving resistance parameter comprises:

determining the adapted value on the basis of an equation system which is linear in a wind speed component in a driving direction (81, 82) of the vehicle (1) during the coasting process and linear in an air resistance co-efficient of the vehicle (1).

8. Method according to Claim 7,
wherein the adapted value for the at least one driving resistance parameter is determined with the method of the least squares.

9. Method according to one of Claims 5 - 8,
wherein the speed (53) of the vehicle (1) is sensed at least three times during the coasting process (21).

10. Method according to one of the preceding claims,
wherein the determination of the adapted value for the at least one driving resistance parameter is carried out as a function of data stored in a digital map.

11. Method according to one of the preceding claims, wherein the method also comprises:

- checking a speed at the end of the coasting distance (17, 18, 56) and/or a length of the coasting distance (17, 18, 56) during the coasting process as a function of the sensed movement (53) of the vehicle (1),
- selective outputting of a warning signal during the coasting process as a function of a result of the checking.

12. Control device for a vehicle (1) comprising:

an interface (4) for receiving data which describe a movement (53) of the vehicle (1) at a plurality of times during a coasting process (21) during which a freewheeling operating state or an overrun cutoff operating state of the vehicle (1) is present and the vehicle (1) is slowing down to a target speed from an initial speed; and
an electronic computing device (3) which is coupled to the interface (4) and which is configured

- to determine a coasting distance (17, 18, 56) of the vehicle (1) as a function of values for a multiplicity of driving resistance parameters,
- to determine an adapted value for at least one driving resistance parameter of the multiplicity of driving resistance parameters as a function of the received data,
and
- to use the adapted value for the at least one driving resistance parameter for subsequently determining a further coasting distance (56) to a further target speed (55) from a further initial speed (54),

**characterized**
**in that** the electronic computing device (3) is configured to determine the adapted value at least for the following driving resistance parameter:

- a wind speed component in a driving direction (81, 82) of the vehicle (1) during the coasting process.

13. Control device according to Claim 12,
which is configured to carry out the method according to one of Claims 2 to 11.

14. Vehicle comprising the electronic control device (2) according to Claim 12 or Claim 13.


**Revendications**

1. Procédé de fonctionnement d'un véhicule (1), comprenant :

- la détermination d'une course de roulage par inertie (17, 18) du véhicule (1) en fonction de valeurs pour une pluralité de paramètres de résistance à la conduite,
- la détection d'un déplacement (53) du véhicule (1) à plusieurs instants pendant une opération de roulage par inertie (21), durant laquelle se présente un état de fonctionnement en roue libre ou un état de fonctionnement de coupure de poussée du véhicule (1) et le véhicule (1) ralentit de lui-même à partir d'une vitesse de départ jusqu'à une vitesse cible,

- la détermination d'une valeur adaptée pour au moins un paramètre de résistance à la conduite de la pluralité de paramètres de résistance à la conduite en fonction du déplacement détecté (53) du véhicule (1), la valeur adaptée pour l'au moins un paramètre de résistance à la conduite étant utilisée pour la détermination subséquente d'une autre course de roulage par inertie (56) d'une autre vitesse de départ (54) jusqu'à une autre vitesse cible (55), **caractérisé en ce que** la valeur adaptée est déterminée au moins pour le paramètre de résistance à la conduite suivant :
- une composante de vitesse du vent le long d'une direction de conduite (81, 82) du véhicule (1) pendant l'opération de roulage par inertie.

2. Procédé selon la revendication 1, le procédé comprenant en outre :

- la détection d'un déplacement (53) du véhicule (1) à plusieurs instants pendant une autre opération de roulage par inertie, une direction de conduite (81) du véhicule (1) pendant l'opération de roulage par inertie et une direction de conduite (82) du véhicule (1) pendant l'autre opération de roulage par inertie étant différentes l'une de l'autre ;
la valeur adaptée étant déterminée au moins pour les paramètres de résistance à la conduite suivants :
- une valeur d'une vitesse du vent (83) et
- une direction du vent (88).

3. Procédé selon la revendication 1 ou la revendication 2,
dans lequel la valeur adaptée est déterminée pour au moins l'un des paramètres de résistance à la conduite suivants :

- un coefficient de résistance de l'air du véhicule (1) ; et/ou
- une pente de la route ; et/ou
- un coefficient de résistance au roulage du véhicule (1).

4. Procédé selon l'une quelconque des revendications précédentes,
dans lequel la détermination de la valeur adaptée est effectuée pour l'au moins un paramètre de résistance à la conduite après l'opération de roulage par inertie (21).

5. Procédé selon l'une quelconque des revendications précédentes,
dans lequel la détection du déplacement du véhicule (1) à plusieurs instants pendant l'opération de roulage par inertie (21) comprend :

la détection d'une vitesse (53) du véhicule (1) pendant l'opération de roulage par inertie avec une fréquence temporelle.

6. Procédé selon la revendication 5,
dans lequel la détection du déplacement du véhicule (1) à plusieurs instants pendant l'opération de roulage par inertie (21) comprend :

la détermination d'une accélération du véhicule (1) pendant l'opération de roulage par inertie à partir de la vitesse détectée (53), de sorte que des valeurs d'accélération se présentent avec une fréquence de détection qui correspond à la fréquence temporelle.

7. Procédé selon la revendication 5 ou la revendication 6,
dans lequel la détermination de la valeur adaptée pour l'au moins un paramètre de résistance à la conduite comprend :

la détermination de la valeur adaptée sur la base d'un système d'équations qui est linéaire dans une composante de vitesse du vent le long d'une direction de conduite (81, 82) du véhicule (1) pendant l'opération de roulage par inertie et qui est linéaire dans un coefficient de résistance de l'air du véhicule (1).

8. Procédé selon la revendication 7,
dans lequel la valeur adaptée pour l'au moins un paramètre de résistance à la conduite est déterminée avec la méthode des moindres carrés.

9. Procédé selon l'une quelconque des revendications 5 à 8,
dans lequel la vitesse (53) du véhicule (1) est détectée à au moins trois instants pendant l'opération de roulage par

**EP 2 591 967 B1**

inertie (21).

**10.** Procédé selon l'une quelconque des revendications précédentes,
dans lequel la détermination de la valeur adaptée pour l'au moins un paramètre de résistance à la conduite est effectuée en fonction de données consignées dans une carte numérique.

**11.** Procédé selon l'une quelconque des revendications précédentes, le procédé comprenant en outre :

- le contrôle d'une vitesse à la fin de la course de roulage par inertie (17, 18, 56) et/ou d'une longueur de la course de roulage par inertie (17, 18, 56) pendant l'opération de roulage par inertie en fonction du déplacement détecté (53) du véhicule (1),
- l'émission sélective, en fonction d'un résultat du contrôle, d'un signal d'avertissement pendant l'opération de roulage par inertie.

**12.** Dispositif de commande pour un véhicule (1), comprenant :

une interface (4) pour la réception de données qui décrivent un déplacement (53) du véhicule (1) à plusieurs instants pendant une opération de roulage par inertie (21), durant laquelle se présente un état de fonctionnement en roue libre ou un état de fonctionnement de coupure de poussée du véhicule (1) et le véhicule (1) ralentit de lui-même à partir d'une vitesse de départ jusqu'à une vitesse cible ; et
un dispositif de calcul électronique (3) qui est accouplé à l'interface (4) et qui est prévu pour

- déterminer une course de roulage par inertie (17, 18, 56) du véhicule (1) en fonction de valeurs pour une pluralité de paramètres de résistance à la conduite,
- déterminer une valeur adaptée pour au moins un paramètre de résistance à la conduite de la pluralité de paramètres de résistance à la conduite en fonction des données reçues, et
- utiliser la valeur adaptée pour l'au moins un paramètre de résistance à la conduite pour la détermination subséquente d'une autre course de roulage par inertie (56) d'une autre vitesse de départ (54) jusqu'à une autre vitesse cible (55),

**caractérisé en ce que**
le dispositif de calcul électronique (3) est prévu pour déterminer la valeur adaptée au moins pour le paramètre de résistance à la conduite suivant :

- une composante de vitesse du vent le long d'une direction de conduite (81, 82) du véhicule (1) pendant l'opération de roulage par inertie.

**13.** Dispositif de commande selon la revendication 12, qui est prévu pour mettre en oeuvre le procédé selon l'une quelconque des revendications 2 à 11.

**14.** Véhicule comprenant le dispositif de commande électronique (2) selon la revendication 12 ou la revendication 13.

FIG. 1

FIG. 2

20

FIG. 3

61 — Messwerte
(reales Verhalten
während
Ausrollvorgang)

62 — Fahrzeugmodell für
Ausrollvorgang
(Fahrwiderstandsparameter)

Adaptionsmodul — 63

Adaption

# FIG. 4

70

71 — Auslesen Standardwerte für
Fahrwiderstandsparameter

Auslesen digitale Karte — 72

Berechnung Ausrollweg — 73

Erfassen von
Geschwindigkeiten
des Fahrzeugs während
des Ausrollvorgangs — 74

75

Abweichung größer
als Schwellenwert?

JA

Ausgeben eines
Warnsignals — 76

NEIN

77

NEIN

Ausrollvorgang
beendet?

JA

Bestimmen
adaptierter Werte für
Fahrwiderstandsparameter — 78

# FIG. 5

22

FIG. 6

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10302504 A1
- DE 102009002521 A1
- DE 102009006524 A1
- DE 102010014565 A1
- DE 102007018733 A1